# EUROPÄISCHE PATENTSCHRIFT

(11) **EP 3 423 313 B1**
(45) Veröffentlichungstag und Bekanntmachung des Hinweises auf die Patenterteilung: **20.11.2019**
(21) Anmeldenummer: 16809640.2
(22) Anmeldetag: 08.12.2016
(51) Int. Cl.: B60R 21/38, B62D 25/12, E05D 3/14

(54) **KLAPPENSCHARNIER FÜR EINE FRONTKLAPPE EINES FAHRZEUGS MIT EINER VERSCHIEBBAREN LAGERUNG EINES HUBAKTUATORS**
HOOD HINGE FOR A FRONT HOOD OF A VEHICLE, HAVING SLIDABLE SUPPORT OF A LIFTING ACTUATOR
CHARNIÈRE D'OUVRANT POUR CAPOT AVANT D'UN VÉHICULE, COMPORTANT UN APPUI DÉPLAÇABLE POUR UN DÉCLENCHEUR DE LEVAGE

(30) Priorität: 01.03.2016 DE 102016002523
(43) Veröffentlichungstag der Anmeldung: 09.01.2019
(73) Patentinhaber: Audi AG, 85045 Ingolstadt (DE)
(72) Erfinder: GABLER, Ivo, 85107 Baar-Ebenhausen (DE)
(86) Internationale Anmeldenummer: PCT/EP2016/002069
(87) Internationale Veröffentlichungsnummer: WO 2017/148494

(56) Entgegenhaltungen:
- DE-A1- 10 136 340
- DE-A1-102009 040 413

## Beschreibung

Die Erfindung betrifft ein Klappenscharnier für eine Frontklappe eines Fahrzeugs mit einem Hubaktuator, welcher im Fall einer drohenden Kollision mit einem Fußgänger aus Gründen des Fußgängerschutzes die Frontklappe anhebt, um dadurch die Bewegungsenergie eines von der Frontklappe aufgefangenen Fußgängers abzubauen.

Aus der DE 2009 040 398 A1 ist ein Klappenscharnier für eine Fahrzeugklappe mit Fußgängerschutz bekannt, welches ein Scharnierunterteil zur Anbindung an eine Fahrzeugkarosserie und ein Scharnieroberteil zur Anbindung an die Fahrzeugklappe sowie Lenkerhebel zur Verbindung des Scharnierunterteils mit dem Scharnieroberteil umfasst, wobei an dem Klappenscharnier ein Hubaktuator zum Anheben des Scharnieroberteils beweglich gelagert und mittels eines lösbaren Fixierelementes in seiner Bewegung relativ zu dem Scharnier gehindert ist. Dieses Fixierelement löst sich von dem Hubaktuator, wenn das Klappenscharnier über seine Ruhestellung hinaus zusammengedrückt wird. Im aktiven Aufprallfall, bei dem der Hubaktuator ausgelöst wird, fixiert das Fixierelement den Hubaktuator, so dass ein Hub des Hubaktuators zur Anhebung der Fahrzeugklappe genutzt werden kann. Im passiven Aufprallfall, bei dem der Hubaktuator nicht ausgelöst, jedoch das Scharnier zusammengedrückt wird, löst sich das Fixierelement von dem Hubaktuator, der dadurch nicht mehr in seiner Verschiebbarkeit gehindert und der somit durch die aufgrund des Aufpralls ausgeübten Kraft nachgeben und entsprechend abtauchen kann. Somit kann der Hubaktuator den Deformationsweg der Fahrzeugklappe nicht mehr behindern.

Nach einem aktiven Aufprall, bei dem der Wegaktuator ausgelöst wurde und die Motorhaube hochgestellt ist, kann der Fahrer nur mit eingeschränkter Sicht weiterfahren. Daher schlägt die DE 10 2009 040 413 A1 vor, bei einem Klappenscharnier für eine Fahrzeugklappe mit Fußgängerschutz und einem Wegaktuator ein Verbindungsmittel vorzusehen, mit welchem eine lösbare und wieder verbindbare Kopplung zwischen einem oberen Scharnieroberteil und einem unteren Scharnieroberteil realisierbar ist, wodurch die Motorhaube nach einem Aufstellen wieder in ihre ursprüngliche Lage zurückbewegt und in dieser Lage mittels diesem Verbindungsmittel fixiert werden kann.

Es ist Aufgabe der Erfindung ein gegenüber dem Stand der Technik verbessertes Klappenscharnier für eine Frontklappe eines Fahrzeugs mit einem Hubaktuator anzugeben.

Aufgabe wird gelöst durch ein Klappenscharnier mit den Merkmalen des Patentanspruchs 1.

Gemäß der Erfindung wird ein Klappenscharnier für eine Frontklappe eines Fahrzeugs realisiert, mit
- einem Scharnierunterteil zur Anbindung an eine Fahrzeugkarosserie,
- einem Scharnieroberteil zur Anbindung an die Frontklappe,
- einem das Scharnierunterteil mit dem Scharnieroberteil verbindenden ersten und zweiten Lenkerhebel, wobei der erste Lenkerhebel teleskopierbar und dessen Teleskopfunktion verriegelbar ausgebildet ist,
- einem Hubaktuator, welcher mit dem Scharnierunterteil mittels eines in dem Scharnierunterteil verschiebbar gelagerten Lagerelementes verbunden ist und zwischen einem Passivzustand und einem aktivierten Aktivzustand eine das Anheben des Scharnieroberteils bewirkende Längenänderung bezogen auf das Lagerelement aufweist, wobei im Passivzustand des Hubaktuators das Lagerelement in einer Ruheposition ist und mit der Aktivierung des Hubaktuators das Lagerelement in eine Aktivposition verschoben ist, und
- einem mit dem Lagerelement wirkverbundenen Entriegelungsmittel zum Entriegeln der Teleskopfunktion des ersten Lenkerhebels, wobei bei einer Verschiebung des Lagerelementes aus der Ruheposition in die Aktivposition das das Entriegelungsmittel betätigt wird.

Dieses erfindungsgemäße Klappenscharnier zeichnet sich durch einen einfachen konstruktiven Aufbau aus, da die Verstellung der Frontklappe eines Fahrzeugs in eine Fußgängerschutzposition über die entriegelte Teleskopfunktion des ersten Lenkerhebels erfolgt, während zum normalen Aufstellung der Frontklappe die Teleskopfunktion verriegelt ist. Die Verstellung der Frontklappe in die Fußgängerschutzposition erfolgt mittels eines aktivierten Hubaktuators, welcher zum einen ein Anheben des Scharnieroberteils gegenüber dem Scharnierunterteil bewirkt und zum anderen über die schwimmende Lagerung des Hubaktuators in dem Scharnierunterteil mittels eines verschiebbaren Lagerelementes eine Entriegelung der Teleskopfunktion des ersten Lenkerhebels erreicht wird. Damit entfällt eine aufwändige Mechanik zur Entriegelung der Teleskopfunktion des ersten Lenkerhebels.

Nach einer Ausgestaltung der Erfindung weist das Scharnierunterteil ein Langloch auf, in welchem das Lagerelement zwischen der Ruheposition und der Aktivposition verschiebbar gelagert ist, wobei vorzugsweise das Lagerelement mittels eines Federelements in der Ruheposition federvorgespannt ist.

In konstruktiv einfacher Weise ist zur Verriegelung der Teleskopfuriktion des ersten Lenkerhebels ein Verriegelungselement vorgesehen. Ferner ist vorzugsweise das Entriegelungsmittel als ein in dem Scharnierunterteil schwenkbar angeordneter Entriegelungshebel ausgebildet, welcher mit dem Lagerelement schwenkverbunden und mit dem Verriegelungselement derart gekoppelt ist, dass bei einer Verschiebung des Lagerelementes aus der Ruheposition in die Aktivposition das Verriegelungselement zum Entriegeln der Teleskopfunktion des ersten Lenkerhebels betätigt wird.

Eine weitere bevorzugte Weiterbildung der Erfindung sieht vor, dass das Verriegelungselement als Verriegelungshebel ausgebildet ist, welcher zur Verriegelung der Teleskopfunktion des ersten Lenkerhebels schwenkbar in dem Scharnierunterteil gelagert ist und zum Entriegeln der Teleskopfunktion des ersten Lenkerhebels mit dem Entriegelungshebel gekoppelt ist.

Zur Realisierung der schwimmenden Lagerung des Hubaktuators ist gemäß einer Ausgestaltung der Erfindung derselbe in einem Aktuatorhalter verschiebbar gelagert, wobei der Aktuatorhalter an dem Scharnierunterteil angeordnet ist. Damit ist gewährleistet, dass bei einer Aktivierung des Hubaktuators sich derselbe in entgegengesetzte Richtung der Längenänderung gegenüber dem Aktuatorhalter verschieben kann.

In vorteilhafter Ausgestaltung der Erfindung ist der Hubaktuator aus einem Aktuatorgehäuse mit einem aus dem Aktuatorgehäuse in den Aktivzustand ausfahrbaren Aktuatorstößel ausgebildet, wobei vorzugsweise das Aktuatorgehäuse des Hubaktuators mit dem Lagerelement verbunden ist. Besonders vorteilhaft ist es, wenn ein solcher Hubaktuator als pyrotechnischer Aktor ausgebildet ist.

Eine besonders vorteilhafte Ausgestaltung der Erfindung sieht vor, dass
- das Scharnieroberteil aus einem unteren Scharnieroberteil und einem mit demselben schwenkbeweglich verbundenen oberen Scharnieroberteil aufgebaut ist, und
- ein weiteres Verriegelungselement zur Verriegelung der Schwenkbewegung zwischen dem oberen und unteren Scharnieroberteil vorgesehen ist, wobei mit der Längenänderung des Hubaktuators das weitere Verriegelungselement zur Entriegelung der Schwenkbewegung zwischen dem Scharnierunterteil und dem Scharnieroberteil betätigt wird.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung eines Klappenscharniers eines Fahrzeugs mit einer Sicht auf einen ersten und zweiten Lenkerhebel gemäß der Erfindung,
- Figur 2: eine schematische und perspektivische Darstellung des Klappenscharniers nach Figur 1 mit einer Sicht auf einen Hubaktuator,
- Figur 3: eine schematische Darstellung des Klappenscharniers nach Figur 1 im geöffneten Zustand,
- Figur 4: eine schematische Darstellung des Klappenscharniers nach Figur 1 in einer Fußgängerschutzposition mit einer Sicht auf den ersten und zweiten Lenkerhebel,
- Figur 5: eine schematische Darstellung des Klappenscharniers nach Figur 4 mit Sicht auf den aktivierten Hubaktuator,
- Figur 6: eine schematische Detaildarstellung der Halterung des Hubaktuators an dem Scharnierunterteil des Klappenscharniers, und
- Figur 7: eine schematische und perspektivische Detaildarstellung der schwimmenden Lagerung des Hubaktuators an dem Scharnierunterteil des Klappenscharniers.

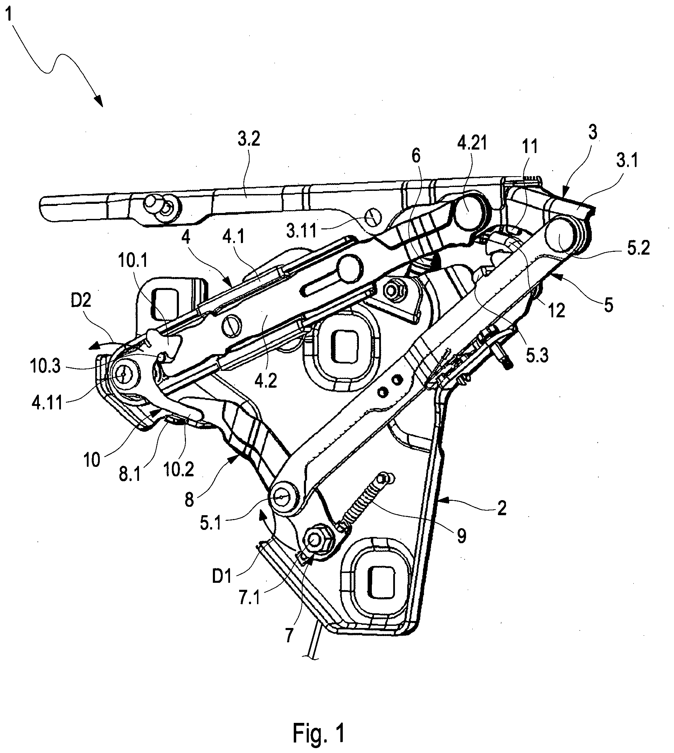

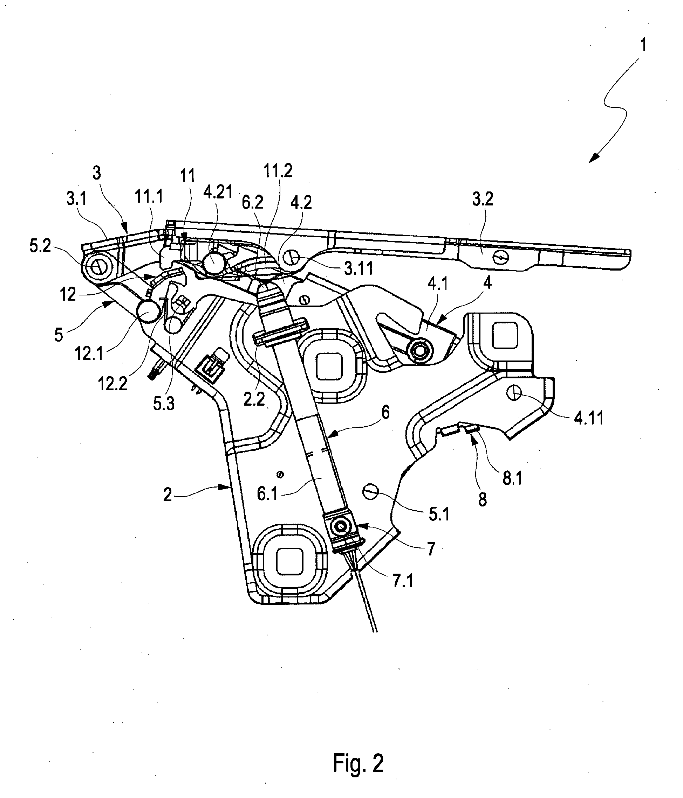

Die Figuren 1 und 2 zeigen ein Klappenscharnier 1 für eine Frontklappe (nicht dargestellt) eines Fahrzeugs, welches aus einem Scharnierunterteil 2 als mit einer Fahrzeugkarosserie des Fahrzeug verbundenen Scharniergrundplatte und einem mit demselben über einen ersten Lenkerhebel 4 und einen zweiten Lenkerhebel 5 schwenkverbundenen Scharnieroberteil 3 aufgebaut ist. Das Scharnieroberteil 3 besteht aus einem unteren Scharnieroberteil 3.1, an welchem der erste Lenkerhebel 4 und der zweite Lenkerhebel 5 angebunden sind, und einem mit dem unteren Scharnieroberteil 3.1 schwenkverbundenen oberen Scharnieroberteil 3.2, welches mit der Frontklappe verbunden ist.

Die Figur 1 zeigt diejenige Seite des Klappenscharniers 1 mit Sicht auf den ersten und den zweiten Lenkerhebel 4 und 5 und die Figur 2 zeigt die gegenüberliegende Seite mit Sicht auf einen pyrotechnisch auslösenden Hubaktuator 6. Die Aktivierung dieses Hubaktuators 6 führt zum Anheben des Scharnieroberteils 3, wodurch die Frontklappe in eine Fußgängerschutzposition verlagert wird.

Der erste Lenkerhebel 4 ist teleskopierbar mittels eines ersten Teilhebels 4.1 und einem zweiten Teilhebel 4.2 ausgeführt. Hierzu ist der erste Teilhebel 4.1 als Führungsschiene mit einem U-förmigen Querschnitt ausgeführt, in welchem der zweite Teilhebel 4.2 geführt ist. Die Teleskopverbindung der beiden Teilhebel 4.1 und 4.2 wird mittels in beiden Teilen jeweils vorgesehenen Langlöchern und Führungszapfen realisiert, wobei wechselseitig ein Führungszapfen eines Teilhebels in ein Langloch des anderen Teilhebels greift. Der erste Teilhebel 4.1 ist an einem Ende mittels einer Schwenkachse 4.11 zusammen mit einem Verriegelungselement 10 schwenkbar in dem Scharnierunterteil 2 gelagert, während der zweite Teilhebel 4.2 mittels einer weiteren Schwenkachse 4.21 schwenkbar mit dem unteren Scharnieroberteil 3.1 schwenkverbunden ist.

Der zweite Lenkerhebel 5 ist mit einem Ende zusammen mit einem Entriegelungshebel 8 als Entriegelungsmittel mittels einer Schwenkachse 5.1 in dem Scharnierunterteil 2 schwenkbar gelagert, während das andere Ende dieses zweiten Lenkerhebels 5 über eine weitere Schwenkachse 5.2 schwenkbar mit dem unteren Scharnieroberteil 3.1 schwenkverbunden ist. Das untere Scharnieroberteil 3.1 weist eine weitere Schwenkachse 3.11 auf, die eine Schwenkverbindung mit dem oberen Scharnieroberteil 3.2 herstellt. Diese Schwenkverbindung wird mittels einem weiteren Verriegelungselement 11 verriegelt und wird nur dann mittels des aktivierten Hubaktuators 6 entriegelt, um das Scharnieroberteil 3 in eine der Fußgängerschutzposition der Frontklappe entsprechenden Position anzuheben.

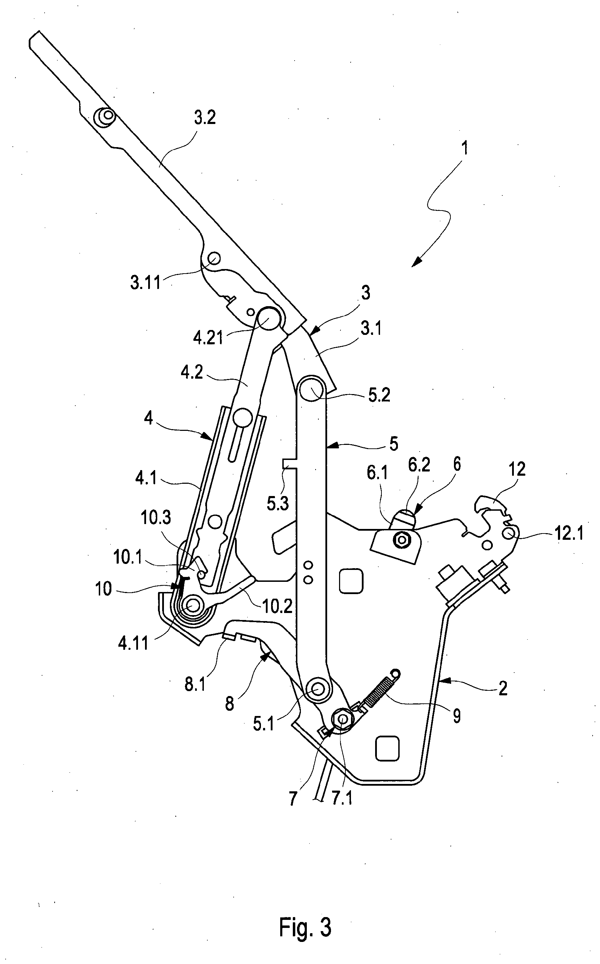

Aus der in den Figuren 1 und 2 gezeigten Schließstellung des Klappenscharniers 1 wird es zum manuellen Öffnen der Frontklappe in eine Offenstellung gemäß Figur 3 bewegt. Hierzu werden die beiden Lenkerhebel 4 und 5 um die Schwenkachsen 4.11, 4.21, 5.1 und 5.2 in die Positionen gemäß Figur 3 verschwenkt, wobei die Teleskopfunktion des ersten Lenkerhebels 4 mittels des Verriegelungselementes 10 verriegelt ist. Auch die Verriegelung der Schwenkbewegung des oberen Scharnieroberteils 3.2 gegenüber dem unteren Scharnieroberteil 3.1 bleibt bestehen.

Dieses Verriegelungselement 10 für die Teleskopfunktion des ersten Lenkerhebels 4 ist als 2-seitiger Winkelhebel ausgeführt, wobei ein Ende des Verriegelungselements 10 einen Verriegelungshaken 10.1 und das andere Ende des Verriegelungselements 10 als Kopplungsarm 10.2 ausgebildet ist, mit welchem eine Kopplung mit dem Entriegelungshebel 8 hergestellt wird. Um die Teleskopfunktion des ersten Lenkerhebels 4 zu verriegeln, weist der zweite Teilhebel 4.2 des ersten Lenkerhebels 4 einen Sperrzapfen 10.3 auf, in welchen der Verriegelungshaken 10.1 des Verriegelungselements 10 eingreift. Während der Bewegung des Klappenscharniers 1 aus der Schließstellung gemäß den Figuren 1 und 2 in die Offenstellung gemäß Figur 3 bleibt die Teleskopfunktion des ersten Lenkerhebels 4 verriegelt, d.h. dass der Verriegelungshaken 10.1 den Sperrzapfen 10.3 umgreift.

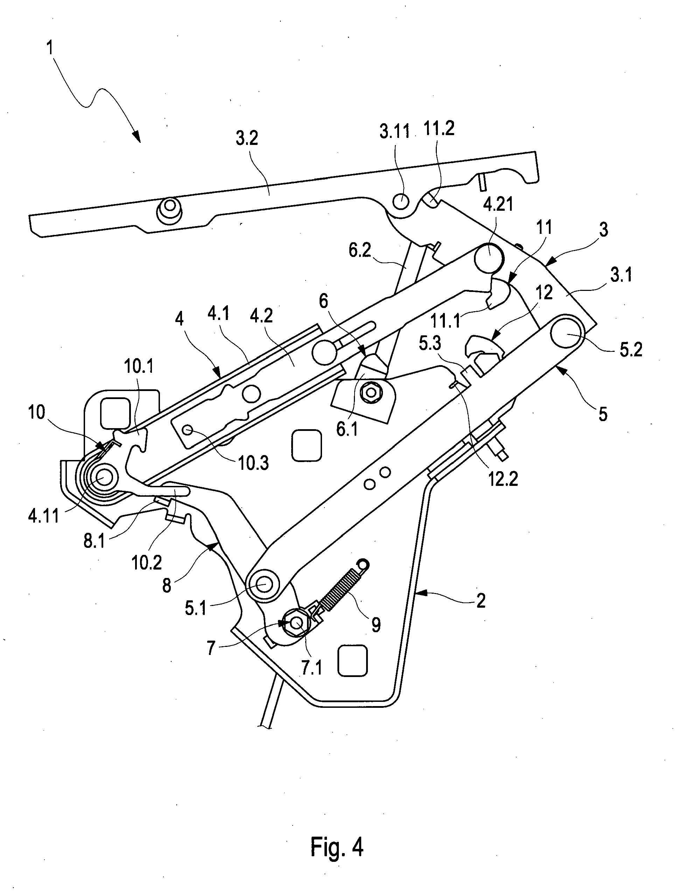

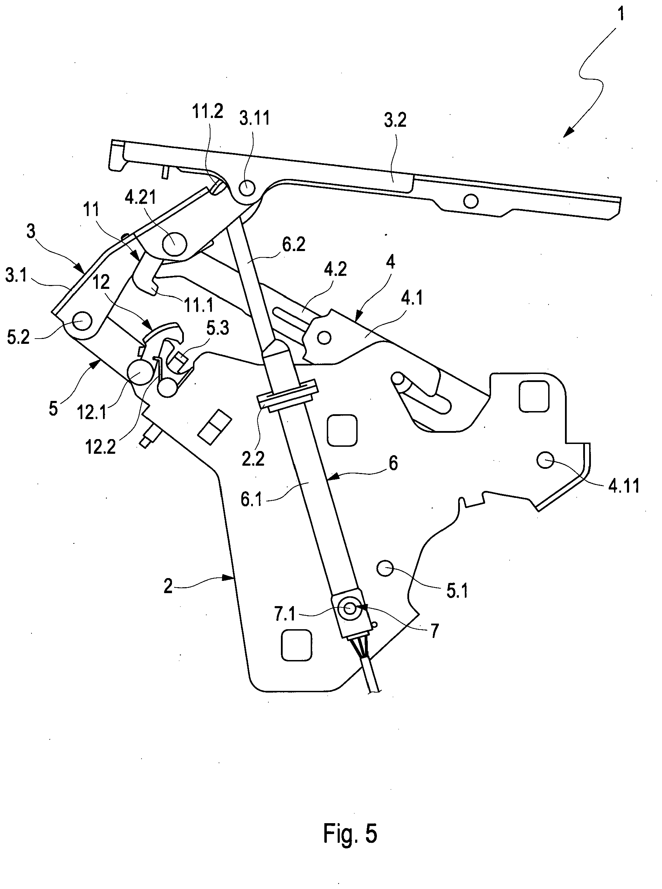

Bei einer Aktivierung des Hubaktuators 6 wird das Scharnieroberteil 3 in eine Position gemäß den Figuren 4 und 5 angehoben, in welcher die Frontklappe eine Fußgängerschutzposition einnimmt. Die Figur 4 zeigt das Klappenscharnier 1 in einer Sicht auf die beiden Lenkerhebel 4 und 5, während die Figur 5 die gegenüberliegende Seite mit Sicht auf den Hubaktuator 6 zeigt.

Zur Bewegung des Klappenscharniers 1 in die der Fußgängerschutzposition der Frontklappe entsprechenden Position verbleibt der zweite Lenkerhebel 5 in seiner Position und bildet mit seiner Schwenkachse 5.2 einen Drehpunkt mit dem unteren Scharnieroberteil 3.1, während der erste Lenkerhebel 4 aus seiner Position gemäß Figur 1 in die Position gemäß Figur 4 teleskopiert wird, so dass ein weiterer Drehpunkt mittels der Schwenkachse 4.21 entsteht. Hierdurch wird eine Schwenkbewegung des oberen Scharnieroberteils 3.2 sowohl nach oben in z-Richtung als auch in x-Richtung entgegen der Fahrtrichtung initiiert, wodurch die Frontklappe die Fußgängerschutzposition erreicht.

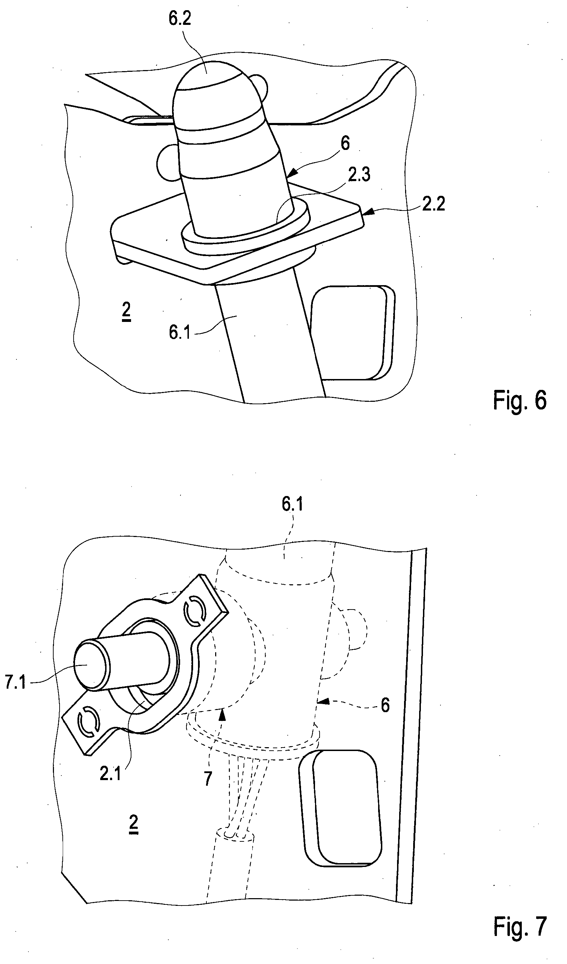

Der pyrotechnische Hubaktuator 5 besteht aus einem Aktuatorgehäuse 6.1 und einem Aktuatorstößel 6.2, wobei das Aktuatorgehäuse 6.1 am unteren Ende mit einem als Stufenbolzen ausgebildeten Lagerelement 7 verbunden ist, welches seinerseits verschiebbar in einem Langloch 2.1 des Scharnierunterteils 2 gelagert ist (vgl. Figur 7). Durch eine Aktivierung des Hubaktuators 6 wird dieser aus einem den Figuren 1 und 2 entsprechenden Passivzustand in einen Aktivzustand gemäß den Figuren 4 und 5 überführt, wobei der Hubaktuator 6 in diesem Aktivzustand gegenüber seinem Passivzustand eine Längenänderung zwischen dem Lagerelement 7 und dem Ende des nicht ausgefahrenen Aktuatorstößels 6.2 aufweist. Die durch das Ausfahren des Aktuatorstößels 6.2 bewirkte Längenänderung des Hubaktuators 5 wird dazu genutzt, das Scharnieroberteil 3 in die der Fußgängerschutzposition der Frontklappe entsprechenden Position anzuheben.

Bei einer Aktivierung des Hubaktuators 5, also der Zündung von dessen Treibladung wird nicht nur der Aktuatorstößel 6.2 nach oben in Richtung des Scharnieroberteils 3 bewegt, sondern durch den mit der Zündung erzeugten Rückstoß gleichzeitig oder zeitversetzt der Hubaktuator 6 nach unten bewegt, da das untere Ende des Aktuatorgehäuses 6.1 mittels des Lagerelementes 7 in dem Langloch 2.1 des Scharnierunterteils 2 verschiebbar gelagert ist. Die Kontur des Langloches 2.1 bestimmt die Richtung und die Strecke der Rückstoßbewegung des Hubaktuators 6 während dessen Aktivierung. Um diese Rückstoßbewegung des Hubaktuators 6 zu ermöglichen, ist das zylindrische Aktuatorgehäuse 6.1 in einem Kragenloch 2.3 eines Aktuatorhalters 2.2 verschiebbar gehalten (vgl. Figur 6).

Das Lagerelement 7 ist im Passivzustand des Aktuators 5 mittels eines Federelementes 9 federvorgespannt und wird dadurch in einer Ruheposition gehalten. Durch die Rückstoßbewegung des Hubaktuators 6 wird das Lagerelement 7 gegen die Federkraft des Federelementes 9 bis an das gegenüberliegende Ende des Langloches 2.1 in eine Aktivposition verschoben. Diese Bewegung des Lagerelementes 7 zwischen dessen Ruheposition und dessen Aktivposition wird auf den mittels der Schwenkachse 5.1 in dem Scharnierunterteil 2 schwenkbar gelagerten Entriegelungshebel 8 übertragen, da ein Ende des Entriegelungshebels 8 schwenkbar auf einer von dem Lagerelement 7 gebildeten Schwenkachse 7.1 angeordnet ist. Das andere Ende des Entriegelungshebels 8 kommt bei einer von dem Lagerelement 7 initiierten Schwenkbewegung in eine Wirkverbindung mit dem Kopplungsarm 10.2 des Verriegelungselements 10, so dass durch eine entsprechende Schwenkbewegung des Verriegelungselements 10 der Sperrzapfen 10.3 von dem Verriegelungshaken 10.1 freigegeben wird, wie dies aus Figur 4 ersichtlich ist. Bewegt sich das Lagerelement 7 aus seiner Ruheposition in die Aktivposition (vgl. Figur 1) wird der Entriegelungshebel 8 in eine Drehrichtung D1 verschwenkt. Dies bewirkt eine Drehbewegung des Verriegelungselements 10 in eine Drehrichtung D2, da der Kopplungsarm 10.2 durch einen am Ende des Entriegelungshebels 8 angeformten Anschlag 8.1 mitgeführt wird. Damit führt die durch die Aktivierung des Hubaktuators 5 erzeugte Rückstoßbewegung zur Entriegelung der Teleskopfunktion des ersten Lenkerhebels 4.

Wie oben bereits ausgeführt dient die Aktivierung des Hubaktuators 6 nicht nur zum Entriegeln des Verriegelungselements 10, sondern hauptsächlich zum Anheben des Scharnieroberteils 3 in eine der Fußgängerschutzposition entsprechenden Stellung. Damit das Scharnieroberteil 3 in die der Fußgängerschutzposition der Frontklappe entsprechenden Position angehoben werden kann, muss die Verriegelung der Schwenkbewegung zwischen dem unteren Scharnieroberteil 3.1 und dem oberen Scharnieroberteil 3.2 durch eine Betätigung des weiteren Verriegelungselements 11 entriegelt werden.

Dieses in dem unteren Scharnieroberteil 3.1 mittels der Schwenkachse 4.21 schwenkbar angeordneten weiteren Verriegelungselement 11 umfasst einen Verriegelungshaken 11.1 sowie einen angeformten Entriegelungsarm 11.2. Mit der Aktivierung des Hubaktuators 6 trifft das freie Ende des aus dem Aktuatorgehäuse 6.1 ausfahrenden Aktuatorstößels 6.2 nach dem Überbrücken eines Abstandes zum Entriegelungsarm 11.2 auf denselben und bewirkt zunächst eine zur Entriegelung der Schwenkbewegung des oberen Scharnieroberteils 3.2 gegenüber dem unteren Scharnieroberteil 3.1 führende Schwenkbewegung und anschließend durch eine Kontaktierung des oberen Scharnieroberteils 3.2 durch den Entriegelungsarm 11.2 ein Anheben des Scharnieroberteils 3 in die der Fußgängerschutzposition der Frontklappe entsprechenden Position, wobei der erste Lenkerhebel 4 vollständig ausgezogen wird. Das Verriegelungselement 11 wird mit einem Federelement (nicht dargestellt) in seiner die Schwenkbewegung des oberen Scharnieroberteils 3.2 mit dem unteren Scharnieroberteil 3.1 verriegelten Position vorgespannt.

Dabei ist die durch die Aktivierung des Hubaktuators 6 bewirkte Längenänderung des Hubaktuators 6 so gewählt, dass in der Aktivposition des Lagerelementes 7 das Ende des ausgefahrenen Aktuatorstößel 6.2 über den kontaktierten Entriegelungsarm 11.2 das obere Scharnieroberteil 3.2 vollständig bis in die der Fußgängerschutzposition der Frontklappe entsprechenden Position anhebt.

Mit dem Entriegelungsvorgang, d.h. mit dem Verschwenken des weiteren Verriegelungselements 11 wird ein Verschwenken eines mittels einer Schwenkachse 12.1 schwenkbar in dem Scharnierunterteil 2 gelagerten Sperrhakens 12 in eine das Verschwenken des zweiten Lenkerhebels 5 sperrende Position bewirkt, indem ein an dem zweiten Lenkerhebel 5 angeformter Sperrzapfen 5.3 von dem Sperrhaken 12 umgriffen wird. Diese Sperrung der Schwenkbewegung des zweiten Lenkerhebels 5 unterbleibt, wenn die Frontklappe in gebrauchsüblicher Verwendung gemäß Figur 3 geöffnet wird. Dieser Sperrhaken 12 wird in seiner nichtsperrenden Position von einem Federelement 12.2 vorgespannt.

### Bezugszeichen

- 1: Klappenscharnier
- 2: Scharnierunterteil
- 2.1: Langloch
- 2.2: Aktuatorhalter
- 2.3: Kragenloch des Aktuatorhalters 2.2
- 3: Scharnieroberteil
- 3.1: unteres Scharnieroberteil
- 3.2: oberes Scharnieroberteil
- 4: erster Lenkerhebel
- 4.1: erster Teilhebel des ersten Lenkerhebels 4
- 4.11: Schwenkachse
- 4.2: zweiter Teilhebel des ersten Lenkerhebels 4
- 4.21: Schwenkachse
- 5: zweiter Lenkerhebel
- 5.1: Schwenkachse
- 5.2: Schwenkachse
- 5.3: Sperrzapfen
- 6: Hubaktuator
- 6.1: Aktuatorgehäuse des Hubaktuators 6
- 6.2: Aktuatorstößel des Hubaktuators 6
- 7: Lagerelement
- 7.1: Schwenkachse
- 8: Entriegelungsmittel, Entriegelungshebel
- 8.1: Anschlag des Entriegelungsmittels 8
- 9: Federelement
- 10: Verriegelungselement
- 10.1: Verriegelungshaken
- 10.2: Kopplungsarm
- 10.3: Sperrzapfen
- 11: weiteres Verriegelungselement
- 11.1: Verriegelungshaken des weiteren Verriegelungselements 11
- 11.2: Entriegelungsarm des weiteren Verriegelungselements 11
- 12: Sperrhaken
- 12.1: Schwenkachse

## Patentansprüche

1. Klappenscharnier (1) für eine Frontklappe eines Fahrzeugs mit
- einem Scharnierunterteil (2) zur Anbindung an eine Fahrzeugkarosserie,
- einem Scharnieroberteil (3) zur Anbindung an die Frontklappe,
- einem das Scharnierunterteil (2) mit dem unteren Scharnieroberteil (3) verbindenden ersten und zweiten Lenkerhebel (4, 5), wobei der erste Lenkerhebel (4) teleskopierbar und dessen Teleskopfunktion verriegelbar ausgebildet ist,
- einem Hubaktuator (6), welcher mit dem Scharnierunterteil (2) mittels eines in dem Scharnierunterteil (2) verschiebbar gelagerten Lagerelementes (7) verbunden ist und zwischen einem Passivzustand und einem aktivierten Aktivzustand eine das Anheben des Scharnieroberteils (3) bewirkende Längenänderung bezogen auf das Lagerelement (7) aufweist, wobei im Passivzustand des Hubaktuators (6) das Lagerelement (7) in einer Ruheposition ist und mit der Aktivierung des Hubaktuators (6) das Lagerelement (7) in eine Aktivposition verschoben ist, und
- einem mit dem Lagerelement (7) wirkverbundenen Entriegelungsmittel (8) zum Entriegeln der Teleskopfunktion des ersten Lenkerhebels (4), wobei bei einer Verschiebung des Lagerelementes (7) aus der Ruheposition in die Aktivposition das Entriegelungsmittel (8) betätigt wird.

2. Klappenscharnier (1) nach Anspruch 1, bei welchem das Scharnierunterteil (2) ein Langloch (2.1) aufweist, in welchem das Lagerelement (7) zwischen der Ruheposition und der Aktivposition verschiebbar gelagert ist.

3. Klappenscharnier (1) nach Anspruch 1 oder 2, bei welchem mittels eines Federelements (9) das Lagerelement (7) in der Ruheposition federvorgespannt ist.

4. Klappenscharnier (1) nach einem der vorhergehenden Ansprüche, bei welchem zur Verriegelung der Teleskopfunktion des ersten Lenkerhebels (4) ein Verriegelungselement (10) vorgesehen ist.

5. Klappenscharnier (1) nach Anspruch 4, bei welchem das Entriegelungsmittel (8) als in dem Scharnierunterteil (2) schwenkbar angeordneten Entriegelungshebel ausgebildet ist, welcher mit dem Lagerelement (7) schwenkverbunden und mit dem Verriegelungselement (10) derart gekoppelt ist, dass bei einer Verschiebung des Lagerelementes (7) aus der Ruheposition in die Aktivposition das Verriegelungselement (10) zum Entriegeln der Teleskopfunktion des ersten Lenkerhebels (4) betätigt wird.

6. Klappenscharnier (1) nach einem der vorhergehenden Ansprüche, bei welchem das Verriegelungselement (10) als Verriegelungshebel ausgebildet ist, welcher zur Verriegelung der Teleskopfunktion des ersten Lenkerhebels (4) schwenkbar in dem Scharnierunterteil (2) gelagert ist und zum Entriegeln der Teleskopfunktion des ersten Lenkerhebels (4) mit dem Entriegelungshebel (8) gekoppelt ist.

7. Klappenscharnier (1) nach einem der vorhergehenden Ansprüche, bei welchem der Hubaktuator (6) in einem Aktuatorhalter (2.2) verschiebbar gelagert ist, wobei der Aktuatorhalter (2.2) an dem Scharnierunterteil (2) angeordnet ist.

8. Klappenscharnier (1) nach einem der vorhergehenden Ansprüche, bei welchem der Hubaktuator (6) aus einem Aktuatorgehäuse (6.1) mit einem aus dem Aktuatorgehäuse (6.1) in den Aktivzustand ausfahrbaren Aktuatorstößel (6.2) ausgebildet ist.

9. Klappenscharnier (1) nach Anspruch 8, bei welchem das Aktuatorgehäuse (6.1) des Hubaktuators (6) mit dem Lagerelement (7) verbunden ist.

10. Klappenscharnier (1) nach einem der vorhergehenden Ansprüche, bei welchem der Hubaktuator (6) als pyrotechnischer Aktor ausgebildet ist.

11. Klappenscharnier (1) nach einem der vorhergehenden Ansprüche, bei welchem
- das Scharnieroberteil (3) aus einem unteren Scharnieroberteil (3.1) und einem mit demselben schwenkbeweglich verbundenen oberen Scharnieroberteil (3.2) aufgebaut ist, und
- ein weiteres Verriegelungselement (11) zur Verriegelung der Schwenkbewegung zwischen dem oberen und unteren Scharnieroberteil (3.1, 3.2) vorgesehen ist, wobei mit der Längenänderung des Hubaktuators (6) das Verriegelungselement (11) zur Entriegelung der Schwenkbewegung zwischen dem Scharnierunterteil (3.1) und dem Scharnieroberteil (3.2) betätigt wird.

## Claims

1. Hood hinge (1) for a front hood of a vehicle having:
- a hinge lower part (2) for attachment to a vehicle body,
- a hinge upper part (3) for attachment to the front hood,
- a first and second link lever (4, 5) connecting the hinge lower part (2) to the lower hinge upper part (3), the first link lever (4) being designed to be telescopic and its telescopic function being lockable,
- a lifting actuator (6) which is connected to the hinge lower part (2) via a bearing element (7) mounted displaceably in the hinge lower part (2) and undergoes a change in length in relation to the bearing element (7) between a passive state and an activated active state to raise the hinge upper part (3), wherein the bearing element (7) assumes a rest position in the passive state of the lifting actuator (6) and the bearing element (7) is moved into an active position when the lifting actuator (6) is activated and
- a releasing device (8) in operative connection with the bearing element (7) for releasing the telescopic function of the first link lever (4), wherein the releasing device (8) is actuated when the bearing element (7) is moved from the rest position to the active position.

2. Hood hinge (1) according to claim 1, wherein the hinge lower part (2) includes an elongated hole (2.1), in which the bearing element (7) is movably mounted between the rest position and the active position.

3. Hood hinge (1) according to claim 1 or 2, wherein the bearing element (7) is biased in the rest position by means of a spring element (9).

4. Hood hinge (1) according to any of the preceding claims, wherein a locking element (10) is provided for locking the telescopic function of the first link lever (4).

5. Hood hinge (1) according to claim 4, wherein the releasing device (8) is designed as a releasing lever which is arranged pivotably in the hinge lower part (2) which releasing lever is pivotably connected to the bearing element (7) and coupled to the locking element (10) such that the locking element (10) is actuated for releasing the telescopic function of the first link lever (4) when the bearing element (7) is moved from the rest position to the active position.

6. Hood hinge (1) according to any of the preceding claims, wherein the locking element (10) is designed as a locking lever which is pivotably mounted in the hinge lower part (2) for locking the telescopic function of the first link lever (4) and is coupled to the releasing lever (8) for releasing the telescopic function of the first link lever (4).

7. Hood hinge (1) according to any of the preceding claims, wherein the lifting actuator (6) is movably mounted in an actuator holder (2.2), the actuator holder (2.2) being arranged on the hinge lower part (2).

8. Hood hinge (1) according to any of the preceding claims, wherein the lifting actuator (6) includes an actuator housing (6.1) with an actuator tappet (6.2) which can be moved out of the actuator housing (6.1) into the active state.

9. Hood hinge (1) according to claim 8, wherein the actuator housing (6.1) of the lifting actuator (6) is connected to the bearing element (7).

10. Hood hinge (1) according to any of the preceding claims, wherein the lifting actuator (6) is designed as a pyrotechnic actuator.

11. Hood hinge (1) according to any of the preceding claims, wherein
- the hinge upper part (3) includes a lower hinge upper part (3.1) and an upper hinge upper part (3.2) which is pivotably connected to the lower hinge upper part, and
- a further locking element (11) is provided for locking the pivoting movement between the upper and lower hinge upper part (3.1, 3.2), wherein with the change in length of the lifting actuator (6) the locking element (11) is activated for releasing the pivoting movement between the hinge lower part (3.1) and the hinge upper part (3.2).

## Revendications

1. Charnière de capot (1) pour un capot d'un véhicule avec
- une partie inférieure de charnière (2) destinée à être attachée à une carrosserie de véhicule,
- une partie supérieure de charnière (3) destinée à être attachée au capot,
- un premier et un deuxième levier formant bras (4, 5) reliant la partie inférieure de charnière (2) à la partie supérieure de charnière (3) inférieure, dans laquelle le premier levier formant bras (4) est réalisé de manière télescopique et dont la fonction télescopique est réalisée de manière à pouvoir être verrouillée,
- un actionneur de levage (6), lequel est relié à la partie inférieure de charnière (2) au moyen d'un élément de palier (7) monté de manière à pouvoir coulisser dans la partie inférieure de charnière (2) et présente, entre un état passif et un état actif activé, une modification de longueur entraînant le relèvement de la partie supérieure de charnière (3) par rapport à l'élément de palier (7), dans laquelle dans l'état passif de l'actionneur de levage (6), l'élément de palier (7) est dans une position de repos et, avec l'activation de l'actionneur de levage (6), l'élément de palier (7) est coulissé dans une position active, et
- un moyen de déverrouillage (8) coopérant avec l'élément de palier (7) pour déverrouiller la fonction télescopique du premier levier formant bras (4), dans laquelle, lors d'un coulissement de l'élément de palier (7) de la position de repos à la position active, le moyen de déverrouillage (8) est actionné.

2. Charnière de capot (1) selon la revendication 1, dans laquelle la partie inférieure de charnière (2) présente un trou oblong (2.1), dans lequel l'élément de palier (7) est monté de manière à pouvoir coulisser entre la position de repos et la position active.

3. Charnière de capot (1) selon la revendication 1 ou 2, dans laquelle l'élément de palier (7) est précontraint par ressort dans la position de repos au moyen d'un élément de ressort (9).

4. Charnière de capot (1) selon l'une quelconque des revendications précédentes, dans laquelle un élément de verrouillage (10) est prévu pour le verrouillage de la fonction télescopique du premier levier formant bras (4).

5. Charnière de capot (1) selon la revendication 4, dans laquelle le moyen de déverrouillage (8) est réalisé sous la forme d'un levier de déverrouillage disposé de manière à pouvoir pivoter dans la partie inférieure de charnière (2), lequel est relié par pivotement à l'élément de palier (7) et est couplé à l'élément de verrouillage (10) de telle manière que, lors d'un coulissement de l'élément de palier (7) de la position de repos à la position active, l'élément de verrouillage (10) est actionné pour déverrouiller la fonction télescopique du premier levier formant bras (4).

6. Charnière de capot (1) selon l'une quelconque des revendications précédentes, dans laquelle l'élément de verrouillage (10) est réalisé sous la forme d'un levier de verrouillage, lequel est monté de manière à pouvoir pivoter dans la partie inférieure de charnière (2) pour le verrouillage de la fonction télescopique du premier levier formant bras (4) et est couplé au levier de déverrouillage (8) pour déverrouiller la fonction télescopique du premier levier formant bras (4).

7. Charnière de capot (1) selon l'une quelconque des revendications précédentes, dans laquelle l'actionneur de levage (6) est monté de manière à pouvoir coulisser dans un système de maintien d'actionneur (2.2), dans laquelle le système de maintien d'actionneur (2.2) est disposé au niveau de la partie inférieure de charnière (2).

8. Charnière de capot (1) selon l'une quelconque des revendications précédentes, dans laquelle l'actionneur de levage (6) est réalisé à partir d'un boîtier d'actionneur (6.1) avec un coulisseau d'actionneur (6.2) pouvant sortir hors du boîtier d'actionneur (6.1) dans l'état actif.

9. Charnière de capot (1) selon la revendication 8, dans laquelle le boîtier d'actionneur (6.1) de l'actionneur de levage (6) est relié à l'élément de palier (7).

10. Charnière de capot (1) selon l'une quelconque des revendications précédentes, dans laquelle l'actionneur de levage (6) est réalisé sous la forme d'un actionneur pyrotechnique.

11. Charnière de capot (1) selon l'une quelconque des revendications précédentes, dans laquelle
- la partie supérieure de charnière (3) est élaborée à partir d'une partie supérieure de charnière inférieure (3.1) et d'une partie supérieure de charnière supérieure (3.2) reliée à celle-ci de manière mobile par pivotement, et
- un autre élément de verrouillage (11) est prévu pour verrouiller le mouvement de pivotement entre les parties supérieures de charnière supérieure et inférieure (3.1, 3.2), dans laquelle l'élément de verrouillage (11) est actionné avec la modification de longueur de l'actionneur de course (6) pour déverrouiller le mouvement de pivotement entre la partie inférieure de charnière (3.1) et la partie supérieure de charnière (3.2).
